# EUROPÄISCHE PATENTSCHRIFT

(11) **EP 2 123 595 B1**
(45) Veröffentlichungstag und Bekanntmachung des Hinweises auf die Patenterteilung: **17.09.2014**
(21) Anmeldenummer: 09160778.8
(22) Anmeldetag: 20.05.2009
(51) Int. Cl.: B66F 9/075, B60K 1/04, B60L 11/18

(54) **Flurförderzeug mit Batteriefachboden mit Rollenaufnahmeöffnungen**
Industrial truck with battery compartment with roller holder opening
Chariot de manutention doté d'un sol spécialisé à batterie pourvu d'ouvertures de réception de rouleaux

(30) Priorität: 23.05.2008 DE 102008024854
(43) Veröffentlichungstag der Anmeldung: 25.11.2009
(73) Patentinhaber: Jungheinrich Aktiengesellschaft, 22047 Hamburg (DE)
(72) Erfinder: Bögelein, Rolf, 74564 Crailsheim (DE); Zeidler, Cristoph, 84032 Landshut (DE)
(74) Vertreter: Tiesmeyer, Johannes

(56) Entgegenhaltungen:
- EP-A1- 0 030 928
- EP-A2- 1 415 874
- DE-A1- 19 956 623
- DE-A1-102004 047 342
- DE-A1-102005 022 094
- DE-A1-102007 031 149
- JP-A- 2003 095 591

## Beschreibung

Die vorliegende Erfindung betrifft ein Flurförderzeug, insbesondere Gabelstapler, mit einem auswechselbaren Batterieblock und einem den Batterieblock aufnehmenden Batteriefach, wobei das Batteriefach wenigstens eine seitliche Zugriffsöffnung zum Einschieben und zum Herausziehen des Batterieblocks umfasst, wobei der Boden des Batteriefachs in Batteriebewegungsrichtung wenigstens eine Führungsbahn aufweist, auf welcher der Batterieblock mit einem daran vorgesehenen Abstützelement relativ zum Batteriefach beweglich abstützbar ist.

Ein derartiges Flurförderzeug ist von der Anmelderin bereits in der früheren Patentanmeldung DE 10 2007 031 149.6 angemeldet worden. Bei Ausgestaltung des Batteriefachbodens mit wenigstens einer Führungsbahn, welche gemäß einer Ausführungsform der genannten früheren Patentanmeldung zwei schienenartige Führungsprofile aufweist, auf denen am Batterieblock angeordnete Rollen verfahrbar sind, stellt sich das Problem, dass in ein derart ausgestaltetes Batteriefach andersartig ausgestaltete Batterieblöcke, welche insbesondere keine den Führungsprofilen entsprechende Abstützelemente bzw. Rollen aufweisen, nur mit Schwierigkeiten oder nicht in das Batteriefach eingeführt werden können.

Aufgabe der Erfindung ist es, das Flurförderzeug der genannten Art derart weiterzubilden, dass verschiedenartig ausgebildete Batterieblöcke im Batteriefach aufgenommen werden können.

Hierzu wird gemäß einem ersten erfindungsgemäßen Aspekt vorgeschlagen, dass der Batteriefachboden mehrere Rollenaufnahmeöffnungen aufweist, in die bedarfsweise dem Batteriefachboden zuzuordnende Rollen einsetzbar sind.

Gemäß einem zweiten erfindungsgemäßen Aspekt wird vorgeschlagen, dass in das Batteriefach ein gesonderter, mittels Distanzstücken vom Batteriefachboden im Abstand angeordneter Einlegeboden einsetzbar ist, der mehrere Rollenaufnahmeöffnungen aufweist, in die bedarfsweise dem Einlegeboden zuzuordnende Rollen einsetzbar sind.

Das Einlegen von Rollen in den Batteriefachboden direkt oder in einen darüber angeordneten Einlegeböden ermöglicht es, einen Batterieblock ohne eigene rollbare oder gleitende Abstützelemente mit seiner Unterseite auf den Rollen im Batteriefachboden oder im Einlegeboden in das Batteriefach einzuschieben bzw. aus dem Batteriefach herauszuziehen. Durch die genannte Ausgestaltung des Batteriefachbodens mit Rollenaufnahmeöffnungen bzw. durch Einsetzen eines gesonderten Einlegebodens mit derartigen Rollenaufnahmeöffnungen kann eine flexible Aufnahme verschiedener Batterieblöcke gewährleistet werden.

Die in die Rollenaufnahmeöffnungen einsetzbaren Rollen sind derart angeordnet, dass die Unterseite eines auf ihnen abgestützten Batterieblocks oberhalb der wenigstens einen Führungsbahn liegt. Dabei hängt die Anordnung des Batterieblocks oberhalb der Führungsbahn einerseits von der Dimensionierung der Rollen und andererseits von der relativen Position der Rollen bezogen auf den Batteriefachboden ab. Im Falle des zusätzlichen Einlegebodens sind die in die Rollenaufnahmeöffnungen einsetzbaren Rollen derart angeordnet sind, dass die Unterseite eines auf ihnen abgestützten Batterieblocks über der Oberseite des Einlegebodens liegt. Hierdurch ist der Batterieblock auf den im Einlegeboden eingesetzten Rollen frei verfahrbar. Auch im Falle des Einlegebodens kann der Abstand zwischen der Unterseite des Batterieblocks und der Oberseite des Einlegebodens durch die Dimensionierung der Rollen und deren relative Positionierung bezogen auf den Einlegeboden bestimmt und ggf. variiert werden.

Sowohl bei im Batteriefachboden als auch im Einlegeboden angeordneten

Rollen ist es bevorzugt, dass die Drehachsen der Rollen orthogonal zur Bewegungsrichtung des Batterieblocks in den Öffnungen ausgerichtet sind, wobei eine jeweilige Rolle mittels ihrer Wellenendstücke im Bereich der Öffnungsränder am Batteriefachboden bzw. am Einlegeboden abstützbar ist.

Vorzugsweise sind an der Unterseite der Öffnungen im Batteriefachboden bzw. im Einlegeboden Schutzelemente vorgesehen, welche die jeweilige Rolle wenigstens teilweise umgeben, wodurch eine Beschädigung der Rollen von unten verhindert werden kann. Eine derartige Beschädigung kann beispielsweise im Falle des Batteriefachbodens auftreten, wenn das Flurförderzeug über Bodenunebenheiten fährt, wobei die Unterseite des Batteriefachbodens kurzzeitig in Berührung mit dem Untergrund kommt. Im Falle des Einlegebodens kann dessen Unterseite beispielsweise beim Einsetzen bzw. Herausnehmen in das bzw. aus dem Batteriefach an den erforderlichen Distanzstücken anschlagen. Ferner ermöglichen die Schutzelemente, welche die Rollen im Falle des Einlegebodens nach unten hin umgeben, dass der Einlegeboden auf den Schutzelementen auf einem Untergrund abgestellt werden kann, wenn er nicht in Gebrauch ist.

Gemäß einer bevorzugten Variante sind die Rollen mittels eines jeweiligen Adapters, in dem sie aufgenommen sind, in die Öffnungen einsetzbar. Dabei ist der Adapter vorzugsweise derart ausgestaltet, dass er formschlüssig und mit wenig Spiel in die Öffnungen im Batteriefachboden bzw. im Einlegeboden eingesetzt werden kann.

Auch im Falle des Adapters sind die Drehachsen der Rollen orthogonal zur Bewegungsrichtung des Batterieblocks in den Öffnungen ausgerichtet, und der Adapter kann in Drehachsenrichtung seitliche Rollenlager aufweisen, an denen eine jeweilige Rolle mittels ihrer Wellenendstücke abstützbar ist.

Um einen Adapter gut abstützen zu können und um die bei aufgenommenem Batterieblock wirkenden Kräfte von der Rolle über den Adapter auf den Batteriefachboden bzw. den Einlegeboden optimal übertragen zu können, wird vorgeschlagen, dass der Adapter einen über die Öffnungskontur vorstehenden Stützrandbereich aufweist, mit dem der Adapter auf dem Batteriefachboden aufliegt. Ein derartiger Stützrandbereich kann durchgehend ausgebildet sein oder mehrere voneinander getrennte Abschnitte aufweisen, wobei der Stützrandbereich bevorzugt eben ausgebildet ist und in flächigem Kontakt mit der Oberseite des Batteriefachbodens bzw. des Einlegebodens steht.

Gemäß einer Weiterbildung weist der Adapter ein mit dem Stützrandbereich verbundenes, eine eingesetzte Rolle wenigstens teilweise umgebendes Schutzelement auf, das die gleiche Funktion erfüllt wie ein oben in Bezug auf den Batteriefachboden bzw. den Einlegeboden beschriebenes Schutzelement.

Weiter wird vorgeschlagen, dass die Rollenauflager des Adapters mit dem Stützrandbereich verbunden sind, so dass an den Rollen bzw. den Wellenendstücken wirkende Kräfte über die Rollenauflager und den Stützrandbereich auf den jeweiligen Boden übertragen werden können.

Im Falle der vorgestellten Variante mit Adapter können eine Rolle und ein Adapter eine Art Rollenmodul bilden, wobei bei am Adapter vorgesehenem Schutzelement auf entsprechende Schutzelemente am Batteriefachboden bzw. am Einlegeboden selbst verzichtet werden kann.

Die Wellenendstücke der Rollen weisen gemäß einer Ausführungsform Ausnehmungen auf, die derart ausgebildet sind, dass die Wellenendstücke eine plane Auflagerfläche aufweisen, welche am Batteriefachboden bzw. am Einlegeboden ggf. unter Vermittlung von entsprechenden Profilstücken oder an den Rollenauflagern des Adapters anliegen.

Insbesondere ist es bevorzugt, wenn die Wellenendstücke im Querschnitt die Form eines Kreissegments aufweisen.

Die Erfindung wird nachfolgend unter Bezugnahme auf die anliegenden Figuren anhand von zwei Ausführungsbeispielen beispielhaft näher erläutert.
- Fig. 1: ist eine perspektivische Schrägansicht auf einen Batterie- fachboden eines Flurförderzeugs, wobei im Batteriefach- boden Rollenaufnahmeöffnungen ausgebildet sind.
- Fig. 2: ist eine Darstellung des Batteriefachbodens mit eingesetzten Rollen.
- Fig. 3: ist eine Ansicht des Batteriefachbodens der Fig. 2 aus einer etwas anderen Perspektive.
- Fig. 4: zeigt eine Ausführungsform mit einem Einlegeboden, in wel- chen Rollen mittels eines Adapters eingesetzt sind.
- Fig. 5: zeigt eine in die Bodenöffnungen einsetzbare Rolle in Per- spektivdarstellung.
- Fig. 6: zeigt einen Adapter mit aufgenommener Rolle in Perspek- tivdarstellung.
- Fig. 7a und 7b: zeigen an der Ausführungsform mit Öffnungen im Batterie- fachboden das Einsetzen von Rollen durch direkte Abstüt- zung der Rollen am Batteriefachboden (Fig. 7a) und durch Abstützung der Rollen mittels Adapter (Fig. 7b), jeweils in Querschnittsansicht entsprechend einer Schnittlinie VII-VII der Fig. 3.
- Fig. 8: zeigt die Ausführungsform mit Einlegeboden im Querschnitt entsprechend der Schnittlinie VIII-VIII der Fig. 6.

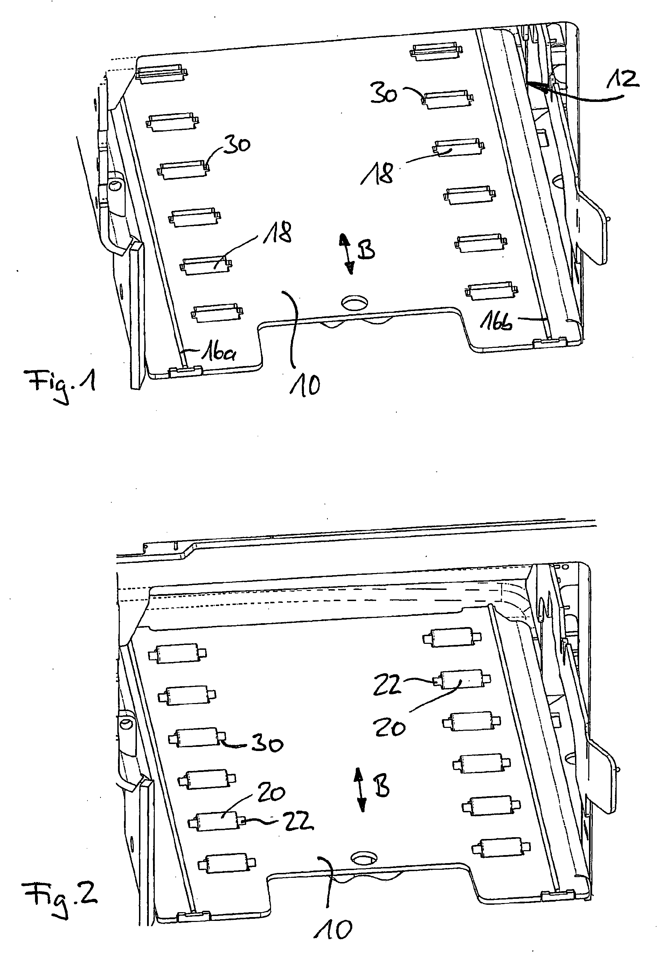

Fig. 1 zeigt eine perspektivische Ansicht eines Batteriefachbodens 10 eines nur angedeuteten Batteriefachs 12, wobei die Blickrichtung von der Seite einer Zugriffsöffnung zum Einschieben und zum Herausziehen eines Batterieblocks gewählt ist. Hinsichtlich der Anordnung eines solchen Batteriefachs 12 an einem hier nicht dargestellten Flurförderzeug wird auf den Stand der Technik und auf die frühere Anmeldung DE 10 2007 031 149.6 verwiesen. Anzumerken ist, dass anstelle von Rollen auch Gleitschuhe oder dergleichen am Batterieblock vorgesehen sein können, die entlang einer Führungsbahn reibungsarm gleiten können.

Am Batteriefachboden 10 sind zwei schienenartige Führungsprofile 16a, 16b angebracht, auf denen ein Batterieblock mit daran angeordneten Rollen beweglich abstützbar ist. Es wird darauf hingewiesen, dass der Batterieblock zu diesem Zweck insbesondere in einem Batteriewagen aufgenommen sein kann, an dem die entsprechenden Rollen vorgesehen sind.

Im Batteriefachboden 10 sind mehrere Rollenaufnahmeöffnungen 18 ausgebildet, in welche bedarfsweise dem Batteriefachboden 10 zuzuordnende Rollen einsetzbar sind. Die Öffnungen 18 sind hier bezogen auf die Blickrichtung links und rechts in der Nähe der Führungsbahnen 16a, 16b angeordnet, so dass eine möglichst breite Abstützung eines Batterieblocks auf den in den Öffnungen 18 eingesetzten Rollen möglich ist.

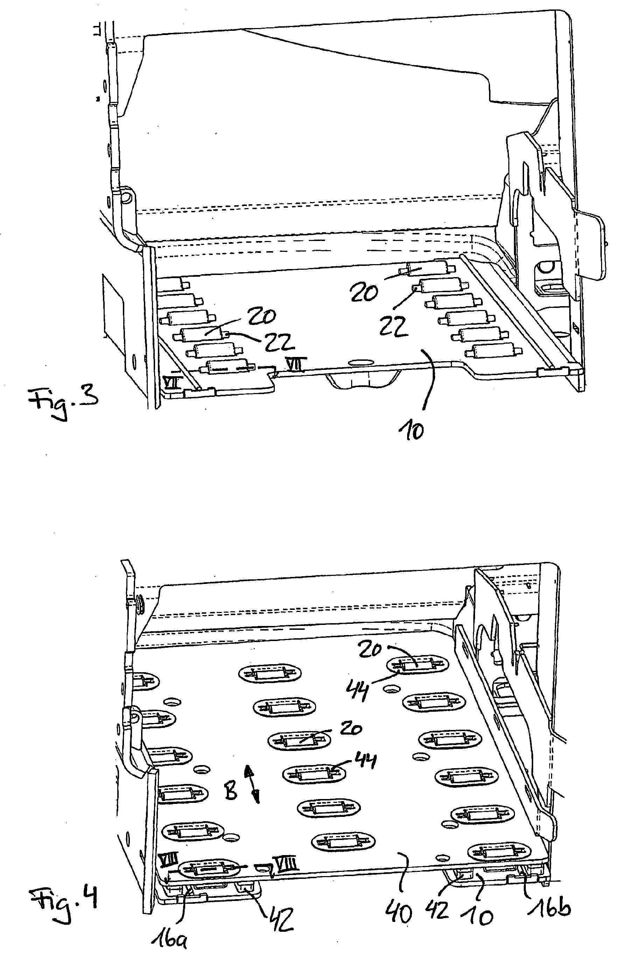

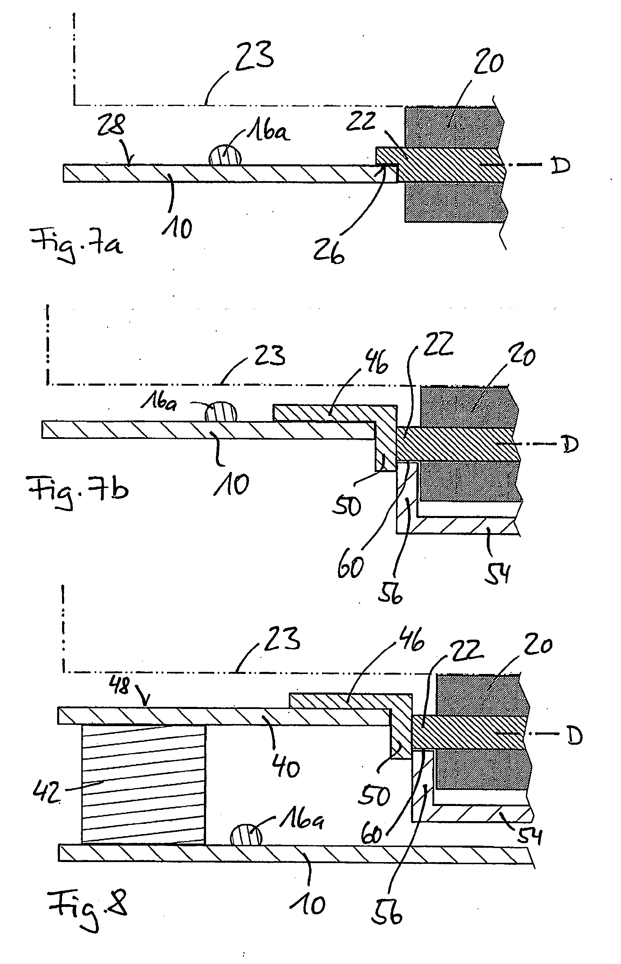

Aus den Fig. 2 und 3 ist der Batteriefachboden 10 mit in die Öffnungen 18 eingesetzten Rollen 20 ersichtlich. Dabei sind die Rollen 20 mit ihren Wellenendstücken 22 im Randbereich der Öffnungen 18 am Batteriefachboden 10 abgestützt. Bei dieser direkten Abstützung der Rolle 20 mittels der Wellenendstücke 22 am Batteriefachboden 10, wie dies aus dem Querschnitt gemäß Fig. 7a ersichtlich ist, liegt eine strichpunktiert angedeutete Unterseite eines auf den Rollen 22 abgestützten Batterieblocks 23 oberhalb der Führungsprofile 16a bzw. 16b, so dass der Batterieblock 23 unabhängig von diesen Führungsprofilen 16a, 16b im Batteriefach bewegt werden kann, insbesondere hineingeschoben bzw. herausgezogen werden kann.

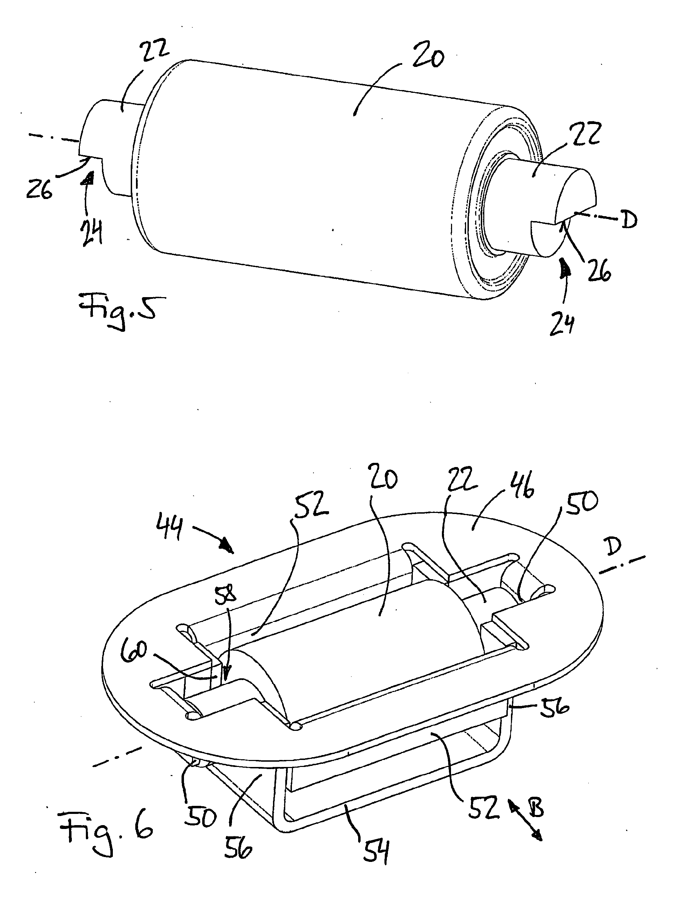

Die im Batteriefachboden 10 gemäß Fig. 2, 3 und 7a aufgenommenen Rollen weisen an ihren Wellenendstücken 22 Aussparungen 24 (Fig. 5) auf, so dass die Wellenendstücke 22 eine plane Auflagerfläche 26 aufweisen, mit denen die Rollen 20 auf der Oberseite 28 des Batteriefachbodens 10 aufliegen.

Aufgrund der Aussparung 24 am Wellenendstück 22 ist die Rolle 20 auch seitlich in Richtung ihrer Drehachse D in der Öffnung 18 geführt. In Bewegungsrichtung B des Batterieblocks (orthogonal zur Drehachsenrichtung D) sind die Rollen aufgrund des Formschlusses zwischen Wellenendstück 22 und parallel zur Drehachsenrichtung D verlaufenden Öffnungsrändern 30 fixiert.

Gemäß der zweiten Ausführungsform in Fig. 4 ist oberhalb des Batteriefachbodens 10 ein zusätzlicher Einlegeboden 40 mittels Distanzstücken 42 angeordnet. Im Einlegeboden 40 sind ebenfalls Rollenaufnahmeöffnungen ausgebildet, in welche gemäß Fig. 4 Rollen 20 mittels eines Adapters 44 eingesetzt sind. Somit kann auf dem Einlegeboden 40 ein Batterieblock auf den Rollen 20 in das Batteriefach hineingeschoben bzw. aus diesem herausgezogen werden, wobei die Ausgestaltung des Batteriefachbodens 10 mit Führungsprofilen 16a, 16b unberücksichtigt bleiben kann, so dass auf den Einlegeboden 40 auch ein Batterieblock aufgenommen werden kann, an dem keine Rollen vorgesehen sind bzw. der nicht in einem Batteriewagen aufgenommen ist.

Der in Fig. 6 dargestellte Adapter 44 weist einen im vorliegenden Ausführungsbeispiel umlaufenden Stützrandbereich 46 auf, auf dem der Adapter 44 auf der Oberseite 48 des Einlegebodens 40 aufliegt, wie dies aus der Querschnittsansicht gemäß Fig. 8 ersichtlich ist.

Der Adapter 44 weist seitlich in Richtung der Drehachse D nach unten gebogene seitliche Führungsabschnitte 50 auf, welche die Führung der Rolle 20 in Drehachsenrichtung D ermöglichen. Ferner weist der Adapter 44 nach unten gebogene Schutzabschnitte 52 auf, welche die im Adapter 44 aufgenommene Rolle 20 nach außen hin schützen. Schließlich ist am Adapter ein im Wesentlichen U-förmiges Profilstück 54 angebracht, das insbesondere mit dem Stützrandbereich 46 verbunden, insbesondere verschweißt ist. An den bezogen auf die Drehachsenrichtung D seitlichen Schenkeln 56 des Profilstücks 54 sind Aussparungen 58 vorgesehen, so dass der Innenrand 60 dieser Aussparung 58 ein seitliches Rollenauflager für die Wellenendstücke 22 der Rolle 20 bildet. Bei einer derartigen Ausgestaltung des Adapters 46 können in die Aussparung 58 auch Wellenendstücke 22 aufgenommen werden, die keine plane Auflagerfläche aufweisen, sondern die Wellenendstücke 22 können an ihrem Außenumfang durch die entsprechend halbkreisförmige Innenkontur 60 abgestützt werden.

Wie aus der Fig. 6 ersichtlich, bilden die Rolle 20 und der Adapter 44 eine Art Rollenmodul, das in Öffnungen 18 im Batteriefachboden 10 bzw. im Einlegeboden 40 eingesetzt werden kann.

Der Vollständigkeit halber wird noch auf Fig. 7b hingewiesen, in welcher der Fall dargestellt ist, dass eine Rolle 20 mittels Adapter 44 am Batteriefachboden 10 abgestützt ist.

Wie bereits erwähnt, wird durch die Anordnung von Rollen 20 im Batteriefachboden 10 bzw. durch die Anordnung eines Einlegebodens 40 mittels Distanzstücken 42 die Möglichkeit gegeben, einen Batterieblock ohne eigene Rollen in einem Batteriefach unterzubringen, das standardmäßig dafür eingerichtet ist, dass der Batterieblock mittels eigener Rollen auf Führungsprofilen 16a, 16b bewegt wird. Somit stellt die vorgeschlagene Lösung von bedarfsweise in den Batteriefachboden 10 bzw. in einen Einlegeboden 40 einsetzbaren Rollen eine Flexibilisierung dar, so dass verschiedene Batteriewechselsysteme und verschiedene Batterieblöcke unterstützt werden können. Die Ausführungsform mit einem Einlegeboden 40, welcher zu einer höheren Positionierung des eingeführten Batterieblocks führt, ist insbesondere für Wechselsysteme interessant, bei denen der Batterieblock durch eine Vorrichtung in das Batteriefach eingeschoben bzw. herausgezogen wird, welche eine magnetische Kopplung oder eine Kopplung mittels Unterdruck (Saugnapf) an einer Batterieblockseitenwand ermöglicht. Der Einlegeboden ermöglicht durch Verwendung entsprechend dimensionierter Distanzstücke auch das Anheben des Batterieblocks auf ein spezielles gewünschtes Niveau, das ggf. für ein bestimmtes Wechselsystem erforderlich ist.

Wenn beispielsweise ein mit dem Batteriefachboden 10 gemäß Fig. 1 - 3 ausgerüstetes neues Flurförderzeug beschafft wird, kann zusätzlich ein Satz Rollen 20 erworben werden. Dies ermöglicht es, dass nicht nur der zum Batteriefachboden 10 mit den Führungsprofilen 16a, 16b passende Batterieblock verwendet werden kann, sondern dass nach Einsetzen der Rollen 20 in die Öffnungen 18 auch ein anderer, insbesondere älterer Batterieblock eines Vorgängermodells des Flurförderzeugs einsetzbar ist.

Ein Rollenmodul (Rolle mit Adapter) und auch Rollen, die direkt in die Öffnungen eingesetzt werden können, können gemeinsam mit einem Flurförderzeug vertrieben werden. Denkbar ist aber auch, dass diese Rollen bzw. Rollenmodule gesondert erhältlich sind, als eine Art Sonderausstattung bzw. als Erweiterung des Flurförderzeugs.

## Patentansprüche

1. Flurförderzeug, insbesondere Gabelstapler, mit einem auswechselbaren Batterieblock (23) und einem den Batterieblock (23) aufnehmenden Batteriefach (12), wobei das Batteriefach (12) wenigstens eine seitliche Zugriffsöffnung zum Einschieben und zum Herausziehen des Batterieblocks (23) umfasst, wobei der Boden (10) des Batteriefachs (12) in Batteriebewegungsrichtung (B) wenigstens eine Führungsbahn (16a, 16b) aufweist, auf welcher ein Batterieblock (23) mit einem an diesem vorgesehenen rollbaren oder gleitenden Abstützelement relativ zum Batteriefach (12) beweglich abstützbar ist,
**dadurch gekennzeichnet, dass** der Batteriefachboden (10) mehrere Rollenaufnahmeöffnungen (18) aufweist, in die bedarfsweise dem Batteriefachboden (10) zuzuordnende Rollen (20) einsetzbar sind, derart, dass ein Batterieblock (23) ohne Abstützelement unabhängig von der Führungsbahn (16a, 16b) und oberhalb derselben mit seiner Unterseite auf den im Batteriefachboden (10) einsetzbaren Rollen (20) beweglich abstützbar ist.

2. Flurförderzeug nach Anspruch 1, **dadurch gekennzeichnet, dass** das wenigstens eine Abstützelement ein Rollkörper oder ein Gleitschuh ist.

3. Flurförderzeug nach Anspruch 1 oder 2, **dadurch gekennzeichnet, dass** die Drehachsen (D) der Rollen (20) orthogonal zur Bewegungsrichtung (B) des Batterieblocks (23) in den Öffnungen (18) ausgerichtet sind, wobei eine jeweilige Rolle (20) mittels ihrer Wellenendstücke (22) im Bereich der Öffnungsränder am Batteriefachboden (10) abstützbar ist.

4. Flurförderzeug nach einem der Ansprüche 1 bis 3, **dadurch gekennzeichnet, dass** an der Unterseite der Öffnungen (18) im Batteriefachboden (10) die jeweilige Rolle (20) wenigstens teilweise umgebende Schutzelemente vorgesehen sind.

5. Fiurförderzeug nach Anspruch 1 oder 2, **dadurch gekennzeichnet, dass** die Rollen (20) in einem jeweiligen Adapter (44) aufgenommen sind, der in die Öffnungen (18) einsetzbar ist.

6. Flurförderzeug nach Anspruch 5, **dadurch gekennzeichnet, dass** die Drehachsen (D) der Rollen orthogonal zur Bewegungsrichtung (B) des Batterieblocks (23) in den Öffnungen (18) ausgerichtet sind, und dass der Adapter (44) in Drehachsenrichtung (D) seitliche Rollenauflager (58, 60) aufweist, an denen eine jeweilige Rolle (20) mittels ihrer Wellenendstücke (22) abstützbar ist.

7. Flurförderzeug nach Anspruch 6, **dadurch gekennzeichnet, dass** der Adapter (44) einen über die Öffnungskontur vorstehenden Stützrandbereich (46) aufweist, mit dem der Adapter (44) auf dem Batteriefachboden (10) aufliegt.

8. Flurförderzeug nach Anspruch 7, **dadurch gekennzeichnet, dass** der Adapter wenigstens ein mit dem Stützrandbereich (46) verbundenes, eine eingesetzte Rolle wenigstens teilweise umgebendes Schutzelement (52, 54) umfasst.

9. Flurförderzeug nach Anspruch 7 oder 8, **dadurch gekennzeichnet, dass** die Rollenauflager (58, 60) des Adapters (44) mit dem Stützrandbereich (46) verbunden sind.

10. Flurförderzeug nach einem der Ansprüche 3 bis 9, **dadurch gekennzeichnet, dass** die Wellenendstücke (22) eine Ausnehmung (24) aufweisen, derart, dass die Wellenendstücke (22) eine plane Auflagerfläche (26) aufweisen, welche am Batteriefachboden (10) oder daran ausgebildeten Auflagerprofilen oder an den Rollenauflagern (58, 60) des Adapters (44) anliegen.

11. Flurförderzeug nach Anspruch 10, **dadurch gekennzeichnet, dass** die Wellenendstücke (22) im Querschnitt die Form eines Kreissegments aufweise.

12. Flurförderzeug, insbesondere Gabelstapler, mit einem auswechselbaren Batterieblock (23) und einem den Batterieblock (23) aufnehmenden Batteriefach (12), wobei das Batteriefach (12) wenigstens eine seitliche Zugriffsöffnung zum Einschieben und zum Herausziehen des Batterieblocks (23) umfasst, wobei der Boden (10) des Batteriefachs (12) in Batteriebewegungsrichtung (B) wenigstens eine Führungsbahn (16a, 16b) aufweist, auf welcher ein Batterieblock (23) mit einem an diesem vorgesehenen rollbaren oder gleitenden Abstützelement relativ zum Batteriefach (12) beweglich abstützbar ist, **dadurch gekennzeichnet, dass** in das Batteriefach (12) ein gesonderter mittels Distanzstücken (42) vom Batteriefachboden (10) im Abstand angeordneter Einlegeboden (40) einsetzbar ist, der mehrere Rollenaufnahmeöffnungen (18) aufweist, in die bedarfsweise dem Einlegeboden (40) zuzuordnende Rollen (20) einsetzbar sind, derart, dass ein Batterieblock (23) ohne Abstützelement unabhängig von der Führungsbahn (16a, 16b) und oberhalb derselben mit seiner Unterseite auf den im Einlegeboden (40) einsetzbaren Rollen (20) beweglich abstützbar ist, und die Unterseite des auf ihnen abgestützten Batterieblocks (23) über der Oberseite (48) des Einlegebodens (40) liegt.

13. Flurförderzeug nach Anspruch 12, **dadurch gekennzeichnet, dass** die Drehachsen (D) der Rollen (20) orthogonal zur Bewegungsrichtung (B) des Batterieblocks (23) in den Öffnungen (18) ausgerichtet sind, wobei eine jeweilige Rolle (20) mittels ihrer Wellenendstücke (22) im Bereich der Öffnungsränder am Einlegeboden (40) abstützbar ist.

14. Flurförderzeug nach Anspruch 12 oder 13, **dadurch gekennzeichnet, dass** an der Unterseite der Öffnungen im Einlegeboden (40) die jeweilige Rolle wenigstens teilweise umgebende Schutzelemente vorgesehen sind.

15. Flurförderzeug nach Anspruch 12 mit einem Adapter (44) nach einem der Ansprüche 5 bis 9.

16. Flurförderzeug nach einem der Ansprüche 12 bis 15, wobei die Wellenendstücke (22) wenigstens ein Merkmal der Ansprüche 10 und 11 aufweisen.

## Claims

1. An industrial truck, in particular forklift truck, with a replaceable battery block (23) and a battery compartment (12) accommodating the battery block (23), the battery compartment (12) comprising at least one lateral access opening for inserting and removing the battery block (23), the floor (10) of the battery compartment (12) having at least one guideway (16a, 16b) in the direction of movement (B) of the battery, on which guideway a battery block (23) may be movably supported relative to the battery compartment (12) with a rolling or sliding supporting element provided on said battery block,
**characterised in that** the battery compartment floor (10) comprises a plurality of roller receiving openings (18), into which if necessary rollers (20) to be associated with the battery compartment floor (10) may be inserted, in such a way that a battery block (23) without supporting element may be movably supported independently of the guideway (16a, 16b) and above the latter with its bottom on the rollers (20) insertable in the battery compartment floor (10).

2. An industrial truck according to claim 1, **characterised in that** the at least one supporting element is a roller body or a guide shoe.

3. An industrial truck according to claim 1 or claim 2, **characterised in that** the axes of rotation (D) of the rollers (20) are oriented in the openings (18) orthogonally to the direction of movement (B) of the battery block (23), a respective roller (20) being supportable by means of its shaft end pieces (22) on the battery compartment floor (10) in the region of the edges of the openings.

4. An industrial truck according to any one of claims 1 to 3, **characterised in that** at the bottom of the openings (18) in the battery compartment floor (10) protective elements at least partially surrounding the respective roller (20) are provided.

5. An industrial truck according to claim 1 or claim 2, **characterised in that** the rollers (20) are accommodated in a respective adapter (44), which may be inserted into the openings (18).

6. An industrial truck according to claim 5, **characterised in that** the axes of rotation (D) of the rollers are oriented in the openings (18) orthogonally to the direction of movement (B) of the battery block (23), and **in that** the adapter (44) comprises lateral roller supports (58, 60) in the direction of the axes of rotation (D), on which roller supports a respective roller (20) may be supported by means of its shaft end pieces (22).

7. An industrial truck according to claim 6, **characterised in that** the adapter (44) has a supporting edge region (46) projecting beyond the opening contour, with which edge region the adapter (44) rests on the battery compartment floor (10).

8. An industrial truck according to claim 7, **characterised in that** the adapter comprises at least one protective element (52, 54) joined to the supporting edge region (46) and at least partially surrounding an inserted roller.

9. An industrial truck according to claim 7 or claim 8, **characterised in that** the roller supports (58, 60) of the adapter (44) are joined to the supporting edge region (46).

10. An industrial truck according to any one of claims 3 to 9, **characterised in that** the shaft end pieces (22) have a cut-out (24) such that the shaft end pieces (22) have a flat support surface (26), said flat support surfaces resting on the battery compartment floor (10) or support profiles formed thereon or on the roller supports (58, 60) of the adapter (44).

11. An industrial truck according to claim 10, **characterised in that** in cross-section the shaft end pieces (22) have the shape of a segment of a circle.

12. An industrial truck, in particular forklift truck, with a replaceable battery block (23) and a battery compartment (12) accommodating the battery block (23), the battery compartment (12) comprising at least one lateral access opening for inserting and removing the battery block (23), the bottom (10) of the battery compartment (12) having at least one guideway (16a, 16b) in the direction of movement (B) of the battery, on which guideway a battery block (23) may be movably supported relative to the battery compartment (12) with a rolling or sliding supporting element provided on said battery block, **characterised in that** a separate insert floor (40) arranged at a distance from the battery compartment floor (10) by means of spacers (42) may be inserted into the battery compartment (12), which insert floor has a plurality of roller receiving openings (18) into which if necessary rollers (20) to be associated with the insert floor (40) may be inserted, in such a way that a battery block (23) without supporting element may be movably supported independently of the guideway (16a, 16b) and above the latter with its bottom on the rollers (20) insertable in the insert floor (40) and the bottom of the battery block (23) supported thereon lies above the top (48) of the insert floor (40).

13. An industrial truck according to claim 12, **characterised in that** the axes of rotation (D) of the rollers (20) are oriented in the openings (18) orthogonally to the direction of movement (B) of the battery block (23), a respective roller (20) being supportable by means of its shaft end pieces (22) on the insert floor (40) in the region of the edges of the openings.

14. An industrial truck according to claim 12 or claim 13, **characterised in that** at the bottom of the openings in the insert floor (40) protective elements at least partially surrounding the respective roller are provided.

15. An industrial truck according to claim 12 with an adapter (44) according to any one of claims 5 to 9.

16. An industrial truck according to any one of claims 12 to 15, wherein the shaft end pieces (22) comprise at least one feature of claims 10 and 11.

## Revendications

1. Chariot de manutention, en particulier chariot élévateur à fourche, doté d'un bloc de batterie échangeable (23) et d'un compartiment de batterie (12) contenant le bloc de batterie (23), dans lequel le compartiment de batterie (12) comporte au moins une ouverture d'accès latérale pour l'insertion et l'extraction du bloc de batterie (23), dans lequel le fond (10) du compartiment de batterie (12) présente dans la direction de déplacement de la batterie (B) au moins une piste de guidage (16a, 16b), sur laquelle un bloc de batterie (23) peut s'appuyer de façon mobile par rapport au compartiment de batterie (12) au moyen d'un élément d'appui roulant ou glissant prévu sur celui-ci, **caractérisé en ce que** le fond (10) du compartiment de batterie présente plusieurs ouvertures de logement de rouleau (18), dans lesquelles des rouleaux (20) à associer au fond (10) du compartiment de batterie peuvent si nécessaire être insérés, de telle manière qu'un bloc de batterie (23) sans élément d'appui puisse, indépendamment de la piste de guidage (16a, 16b) et au-dessus de celle-ci, être appuyé de façon mobile avec sa face inférieure sur les rouleaux (20) insérables dans le fond (10) du compartiment de batterie.

2. Chariot de manutention selon la revendication 1, **caractérisé en ce que** ledit au moins un élément d'appui est un corps de roulement ou un patin de guidage.

3. Chariot de manutention selon la revendication 1 ou 2, **caractérisé en ce que** les axes de rotation (D) des rouleaux (20) sont orientés perpendiculairement à la direction de déplacement (B) du bloc de batterie (23) dans les ouvertures (18), dans lequel un rouleau respectif (20) est apte à s'appuyer sur le fond (10) du compartiment de batterie au moyen de ses bouts d'arbre (22) dans la région des bords des ouvertures.

4. Chariot de manutention selon l'une quelconque des revendications 1 à 3, **caractérisé en ce qu'**il est prévu sur le côté inférieur des ouvertures (18) dans le fond (10) du compartiment de batterie, des éléments de protection entourant au moins partiellement le rouleau respectif (20).

5. Chariot de manutention selon la revendication 1 ou 2, **caractérisé en ce que** les rouleaux (20) sont logés dans un adaptateur respectif (44), qui est apte à être inséré dans les ouvertures (18).

6. Chariot de manutention selon la revendication 5, **caractérisé en ce que** les axes de rotation (D) des rouleaux sont orientés perpendiculairement à la direction de déplacement (B) du bloc de batterie (23) dans les ouvertures (18), et **en ce que** l'adaptateur (44) présente dans la direction des axes de rotation (D) des appuis de rouleau latéraux (58, 60), sur lesquels un rouleau respectif (20) est apte à s'appuyer au moyen de ses bouts d'arbre (22).

7. Chariot de manutention selon la revendication 6, **caractérisé en ce que** l'adaptateur (44) présente une région de bord d'appui (46) saillante au-dessus du contour de l'ouverture, avec lequel l'adaptateur (44) repose sur le fond (10) du compartiment de batterie.

8. Chariot de manutention selon la revendication 7, **caractérisé en ce que** l'adaptateur comprend au moins un élément de protection (52, 54) relié à la région de bord d'appui (46) et entourant au moins partiellement un rouleau inséré.

9. Chariot de manutention selon la revendication 7 ou 8, **caractérisé en ce que** les appuis de rouleau (58, 60) de l'adaptateur (44) sont reliés à la région de bord d'appui (46).

10. Chariot de manutention selon l'une quelconque des revendications 3 à 9, **caractérisé en ce que** les bouts d'arbre (22) présentent un évidement (24), de telle manière que les bouts d'arbre (22) présentent une face d'appui plane (26), qui repose sur le fond (10) du compartiment de batterie ou sur des profilés d'appui formés sur celui-ci ou sur les appuis de rouleau (58, 60) de l'adaptateur (44).

11. Chariot de manutention selon la revendication 10, **caractérisé en ce que** les bouts d'arbre (22) présentent une section transversale en forme de segment de cercle.

12. Chariot de manutention, en particulier chariot élévateur à fourche, doté d'un bloc de batterie échangeable (23) et d'un compartiment de batterie (12) contenant le bloc de batterie (23), dans lequel le compartiment de batterie (12) comporte au moins une ouverture d'accès latérale pour l'insertion et l'extraction du bloc de batterie (23), dans lequel le fond (10) du compartiment de batterie (12) présente dans la direction de déplacement de la batterie (B) au moins une piste de guidage (16a, 16b), sur laquelle un bloc de batterie (23) peut s'appuyer de façon mobile par rapport au compartiment de batterie (12) au moyen d'un élément d'appui roulant ou glissant prévu sur celui-ci, **caractérisé en ce qu'**un fond rapporté distinct (40) disposé à distance du fond (10) du compartiment de batterie au moyen de pièces d'écartement (42) peut être introduit dans le compartiment de batterie (12), et présente plusieurs ouvertures de logement de rouleaux (18) dans lesquelles des rouleaux à associer au fond rapporté (40) peuvent si nécessaire être insérés, de telle manière qu'un bloc de batterie (23) sans élément d'appui puisse, indépendamment de la piste de guidage (16a, 16b) et au-dessus de celle-ci, être appuyé de façon mobile avec sa face inférieure sur les rouleaux (20) insérables dans le fond rapporté (40) et que la face inférieure du bloc de batterie (23) appuyé sur ceux-ci repose sur la face supérieure (48) du fond rapporté (40).

13. Chariot de manutention selon la revendication 12, **caractérisé en ce que** les axes de rotation (D) des rouleaux (20) sont orientés perpendiculairement à la direction de déplacement (B) du bloc de batterie (23) dans les ouvertures (18), dans lequel un rouleau respectif (20) peut s'appuyer sur le fond rapporté (40) au moyen de ses bouts d'arbre (22) dans la région des bords des ouvertures.

14. Chariot de manutention selon la revendication 12 ou 13, **caractérisé en ce qu'**il est prévu sur le côté inférieur des ouvertures dans le fond rapporté (40), des éléments de protection entourant au moins partiellement le rouleau respectif.

15. Chariot de manutention selon la revendication 12 avec un adaptateur (44) selon l'une quelconque des revendications 5 à 9.

16. Chariot de manutention selon l'une quelconque des revendications 12 à 15, dans lequel les bouts d'arbre (22) présentent au moins une des caractéristiques des revendications 10 et 11.
